# EUROPÄISCHE PATENTANMELDUNG

(11) **EP 0 960 595 A1**
(43) Veröffentlichungstag der Anmeldung: **01.12.1999**
(21) Anmeldenummer: 98250176.9
(22) Anmeldetag: 25.05.1998
(51) Int. Cl.: A47L 9/18, B01D 47/02

(54) **Staubfilterung mit Wasser**

(71) Anmelder: Erdogan, Hasan, 63128 Dietzenbach (DE)
(72) Erfinder: Erdogan, Hasan, 63128 Dietzenbach (DE)

(57) **Zusammenfassung**

Die Erfindung betrifft die Staubfilterung durch das Wasser
- ein Ersatzgerät für den Staubsauger.-

Zu diesem Zweck sind vorgesehen, ein Behälter der bis zur Hälfte mit Wasser gefüllt ist, und dessen Deckel mit einem Rohr, der bis zum Wasser taucht, und eine Öffnung in der Mitte hat, an dem der Propeller montiert ist.
Durch ansaugen der Behälterluft mit dem Staubsauger, wird der im Deckel montierte Propeller in Bewegung gesetzt. Der Propeller rotiert das Wasser und Verhindert dadurch das Spritzen des Wassers in das Schlauch.
Ein Schlauch, der zum Luftansaugstutzen eingerastet ist, führt zum Rohr für Boden, der integrierte Gummiteil am Schlauch ermöglicht das anschellen, der andere Schlauch der zum Luftabsaugstutzen eingerastet ist, führt zum Staubsaugerschlauch, der mit dem integrierten Gummiteil auch zum anschellen ermöglicht.

Durch saugen der Staubsauger gelingen die aufgesaugten in den Behälter, so können Staub und Mikroorganismen durch das Wasser nicht raus und bleiben im Wasser.

## Beschreibung

Die Erfindung betrifft die Staubfilterung durch das Wasser - ein Ersatzgerät für den Staubsauger.

Mit dem Haushalts- Staubsaugern, die mit Filtertüten ausgerüstet sind, saugen nur die groben Staubkörner. Die ganz kleinen Staubpartikeln, Hausmilben und andere Mikroorganismen werden durch Filtertüten nach außen gedüst, die dünnsten Staubpartikeln und die Mikroorganismen sind gerade die gefährlichsten, denn sie gelingen bis in die Bronchien.

Um das zu verhindern, sind zu diesem Zweck vorgesehen, ein Behälter der bis zur Hälfte mit Wasser gefüllt ist und dessen Deckel mit einem Rohr, der bis zum Wasser taucht und eine Öffnung in der Mitte hat, an dem der Propeller montiert ist. Ein Schlauch, der zum Luftansaugstutzen eingerastet ist, führt zum Rohr für Boden, der integrierte Gummiteil am Schlauch ermöglicht das anschellen, der andere Schlauch der zum Luftabsaugstutzen eingerastet ist, führt zum Staubsaugerschlauch, der mit dem integrierte Gummiteil auch zum anschellen ermöglicht.

Durch saugen der Staubsauger gelingen die aufgesaugten in den Behälter, so können Staub und Mikroorganismen durch das Wasser nicht raus und bleiben im Wasser.

### Staubfilterung durch das Wasser - eine Ersatzgerät für den Staubsauger

FIG.1
   Eine Seitenansicht
   1. Schlauch zum Staubsauger
   2. Gummiteil zum Schlauch
   3. Doppelte Gummierung
   4. Schlauch zum Rohr für Boden
   5. Integrierte Gummiteil
   6. Doppelte Gummierung
   7. Rohr zum Wasser
   8. Deckel
   9. Behälter
   10. Wasser
FIG.2
   Eine Draufsicht
   11.Luftansaugstutzen
   12.Rohr zum Luftansaugstutzen
   13.Propeller
   14.Rohr zum Luftabsaugstutzen
   15.Fahrgestell
   16.Schelle
FIG. 3
   17.Rohr für Boden
   18.Staubsaugerschlauch
   19.Staubsauger

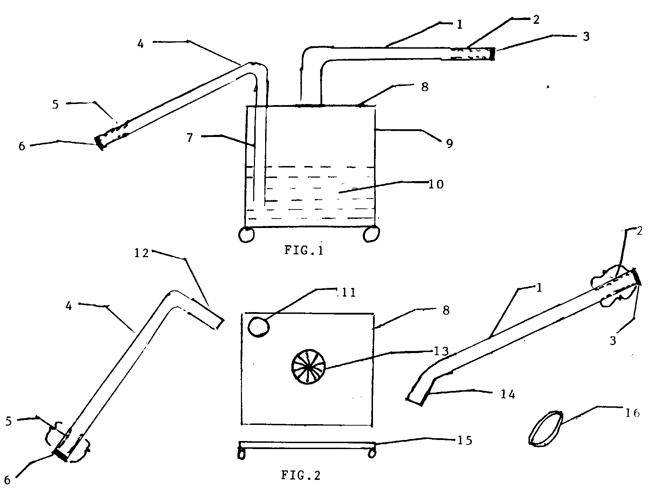

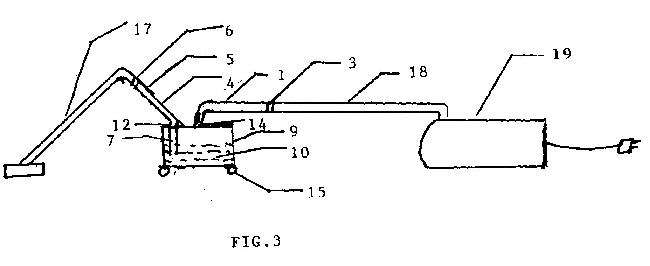

## Patentansprüche

Staubfilterung durch das Wasser - ein Ersatzgerät für den Staubsauger.

1. Staubfilterung durch das Wasser, dadurch gekennzeichnet, ein Behälter (9) wird bis zur Hälfte mit Wasser (10) gefüllt, und eine Deckel (8) vorgesehen sind. In die Mitte des Deckels wird ein Propeller (13)montiert, dies zur rotieren des Wassers dient.
Ein Rohr (7) der mit der Öffnung der Luftansaugstutzen (11) wird mit der Schlauch zum Rohr für Boden (4) eingerastet.

2. Staubfilterung durch das Wasser, nach Anspruch 1, dadurch gekennzeichnet, Schlauch zum Rohr für Boden (4) hat am anderen Seite integrierte (Gummiteil (5) und doppelte Gummierung (6) zum anklammern mit Schelle (16) wird der Rohr zum Boden (17) angeklammert.

3. Staubfilterung durch das Wasser nach Anspruch 1 und 2, dadurch gekennzeichnet, Schlauch zum Staubsauger (1) hat integrierte Gummiteil (2) und doppelte Gummierung (3) zum anklammern mit der Schelle (6) dem Staubsaugerschlauch Angeklammert.
Durch ansaugen des Staubsaugers (19) gelingen die angesaugten (Staub, Schmutz, u.s.w.) in den Behälter, so können Staub und Mikroorganismen durch das Wasser nicht raus und bleiben im Wasser.
